# EUROPEAN PATENT APPLICATION

(11) **EP 4 534 934 A2**
(43) Date of publication of application: **09.04.2025**
(21) Application number: 24220917.9
(22) Date of filing: 08.05.2018
(51) Int. Cl.: F25D 25/04

(54) **AUTOMATED STORAGE AND RETRIEVAL SYSTEM COMPRISING DIFFERENT TEMPERATURE ZONES**

(30) Priority: 29.06.2017 NO 20171064
(62) Divisional of application: 18723809.2
(71) Applicant: AutoStore Technology AS, 5578 Nedre Vats (NO)
(72) Inventor: FJELDHEIM, Ivar, 5578 Nedre Vats (NO); AUSTRHEIM, Trond, 5578 Nedre Vats (NO); HOGNALAND, Ingvar, 5578 Nedre Vats (NO); GJERDEVIK, Øystein, 5578 Nedre Vats (NO)
(74) Representative: Kilburn & Strode LLP

(57) **Abstract**

An automated storage and retrieval system comprising a three-dimensional grid 4 with a plurality of storage columns 5 for storing containers 6, one or more container handling vehicles 9 operating on the grid 4 for retrieving storage containers 6 from and storing storage containers 6 in the storage columns 5, and for transporting the storage containers 6 horizontally across the grid 4, and an elevator 30 for transporting containers 6 between different temperature zones arranged horizontally relative to the storage grid 4, and where the temperature zones are divided by a thermal barrier 28.

## Description

### Technical field

The present invention relates to an automated storage and retrieval system comprising a three-dimensional grid with a plurality of storage columns for storing containers. More specifically, the invention relates to such a system having different temperature zones, and means for transporting containers between the different temperature zones.

### Background and prior art

The applicant's own AutoStore ^{©} system is an automated storage system comprising a three-dimensional storage grid wherein storage containers are stacked on top of each other to a certain height in columns in the grid, and where container operating vehicles are operating on the grid.

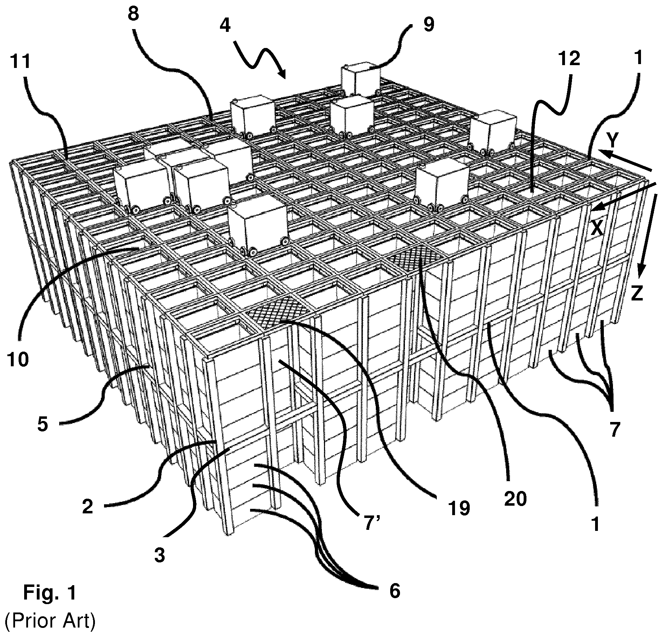

Fig. 1 discloses a framework structure 1 of such an automated storage and retrieval system with container handling vehicles operating on a grid.

The framework structure 1 comprises a plurality of upright members 2 and a plurality of horizontal members 3, which are supported by the upright members 2. The members 2, 3 may typically be made of metal, e.g. extruded aluminium profiles.

The framework structure 1 defines a storage grid 4 comprising storage columns 5 arranged in rows, in which the storage columns 5 store containers 6, also known as bins, that are stacked one on top of each other to form stacks 7. Each storage container 6 may typically contain a plurality of product items (not shown). The product items within a storage container 6 may be identical or they may be of different product types depending on the application. The framework structure 1 prevents horizontal movement of the stacks 7 of storage containers 6, and guides vertical movement of the containers 6.

The horizontal members 3 comprise a rail system 8 arranged in a grid pattern across the top of the storage columns 5, on which rail system 8 a plurality of container handling vehicles 9 are operated to raise storage containers 6 from and lower storage containers 6 into the storage columns 5, and to transport the storage containers 6 above the storage columns 5. The rail system 8 comprises a first set of parallel rails 10 arranged to guide movement of the container handling vehicles 9 in a first direction X across the top of the frame structure 1, and a second set of parallel rails 11 arranged perpendicular to the first set of rails 10 to guide movement of the container handling vehicles 9 in a second direction Y, which is perpendicular to the first direction X. In this way, the rail system 8 defines grid columns 12 above which the container handling vehicles 9 can move laterally above the storage columns 5 in either the X or Y direction, i.e. in a plane which is parallel to the horizontal X-Y plane.

Each container handling vehicle 9 comprises a vehicle body and first and second sets of wheels which enable the lateral movement of the container handling vehicle 9, i.e. the movement in the X and Y directions. A first set of wheels is arranged to engage with two adjacent rails of the first set 10 of rails, and the second set of wheels is arranged to engage with two adjacent rails of the second set 11 of rails. Each set of wheels can be lifted and lowered, so that the first set of wheels and/or the second set of wheels can be engaged with the respective set of rails 10, 11 at any one time.

Each container handling vehicle 9 also comprises a lifting device (not shown in Fig. 1) for vertical transportation of storage containers 6, e.g. raising a storage container 6 from and lowering a storage container 6 into a storage column 5. The lifting device further comprises a gripping device (not shown) which is adapted to engage a storage container 6, which gripping device can be lowered from the vehicle body so that the position of the gripping device with respect to the vehicle body 13 can be adjusted in a third direction Z, which is orthogonal to the first direction X and the second direction Y.

Each container handling vehicle 9 comprises a storage compartment or space for receiving and stowing a storage container 6 when transporting the storage container 6 across the grid 4. The storage space may comprise a cavity arranged centrally within the vehicle body 13, e.g. as is described in WO2014/090684A1, the contents of which are incorporated herein by reference.

Alternatively, the container handling vehicles may have a cantilever construction, as is described in NO317366, the contents of which are also incorporated herein by reference.

In a storage grid, most of the grid columns 12 are storage columns 5, i.e. grid columns where storage containers are stored in stacks. However, a grid normally has at least one grid column which is not used for storing storage containers, but which comprises a location where the container handling vehicles can drop off and/or pick up storage containers so that they can be transported to an access station where the storage containers can be accessed from outside of the grid or transferred out of or into the grid. Within the art, such a location is normally referred to as a "port" and the grid column in which the port is located may be referred to as a port column.

The grid 4 in Fig. 1 comprises two port columns 19 and 20. The first port column 19 may for example be a dedicated drop-off port column where container handling vehicles 9 can drop off storage containers 6 to be transported to an access or a transfer station (not shown), and the second port 20 column may be a dedicated pick-up port column where the container handling vehicles 9 can pick up storage containers 6 that have been transported to the grid 4 from an access or a transfer station.

The access station may typically be a picking or a stocking station where product items are removed from or positioned into the storage containers. In a picking or a stocking station, the storage containers are normally never removed from the automated storage and retrieval system, but are returned into the grid once accessed. A port can also be used for transferring storage containers out of or into the grid, e.g. for transferring storage containers to another storage facility (e.g. to another grid or to another automated storage and retrieval system), to a transport vehicle (e.g. a train or a lorry), or to a production facility.

A conveyor system comprising conveyors is normally employed to transport storage containers between the ports and the access station.

If the port and the access station are located at different levels, the conveyor system comprises a lift device for transporting the storage containers vertically between the port and the access station.

The conveyor system may be arranged to transfer storage containers between different grids, e.g. as is described in WO2014/075937A1, the contents of which are incorporated herein by reference.

WO2016/198467A1, the contents of which are incorporated herein by reference, disclose an example of a prior art access system having conveyor belts (Figs. 5a and 5b) and a frame mounted track (Figs. 6a and 6b) for transporting storage containers between ports and work stations where operators can access the storage containers.

When a storage container 6 stored in the grid 4 disclosed in Fig. 1 is to be accessed, one of the container handling vehicles 9 is instructed to retrieve the target storage container from its position in the grid 4 and transport it to the drop-off port 19. This operation involves moving the container handling vehicle to a grid location above the storage column in which the target storage container is positioned, retrieving the storage container from the storage column using the container handling vehicle's lifting device (not shown), and transporting the storage container to the drop-off port 19. If the target storage container is located deep within a stack 7, i.e. with one or a plurality of other storage containers positioned above the target storage container, the operation also involves temporarily moving the above-positioned storage containers prior to lifting the target storage container from the storage column. This step, which is sometimes referred to as "digging" within the art, may be performed with the same container handling vehicle that is subsequently used for transporting the target storage container to the drop-off port 19, or with one or a plurality of other cooperating container handling vehicles. Alternatively, or in addition, the automated storage and retrieval system may have container handling vehicles specifically dedicated to the task of temporarily removing storage containers from a storage column. Once the target storage container has been removed from the storage column, the temporarily removed storage containers can be repositioned into the original storage column. However, the removed storage containers may alternatively be relocated to other storage columns.

When a storage container 6 is to be stored in the grid 4, one of the container handling vehicles 9 is instructed to pick up the storage container from the pick-up port 20 and transport it to a grid location above the storage column where it is to be stored. After any storage containers positioned at or above the target position within the storage column stack have been removed, the container handling vehicle 9 positions the storage container at the desired position. The removed storage containers may then be lowered back into the storage column, or relocated to other storage columns.

For monitoring and controlling the automated storage and retrieval system, e.g. monitoring and controlling the location of respective storage containers within the grid 4; the content of each storage container 6; and the movement of the container handling vehicles 9 so that a desired storage container can be delivered to the desired location at the desired time without the container handling vehicles 9 colliding with each other, the automated storage and retrieval system comprises a control system, which typically is computerised and comprises a database for keeping track of the storage containers.

Known automated storage and retrieval systems as described above are constructed to be operated in areas having the same temperature. Inside a building this will typically be at ambient temperature, e.g. about 20°C. Usually, the temperature of product items stored in the containers is not a critical factor. However, for some products, such as food, the temperature is critical. To keep food cold at fridge temperature, a temperature between 1 - 4°C is desirable. For food to be frozen a temperature below - 20°C is desirable. This requires additional installations in the automated storage and retrieval system.

There is a need for an automatic storage and retrieval system having different temperature zones where the temperature can be controlled, and a transportation system for fast and efficient access and transportation of containers between the different temperature zones.

### Summary of the invention

According to the invention, an automated storage and retrieval system is provided, where the system comprises a three-dimensional storage grid with a plurality of storage columns for storing containers, one or more container handling vehicles, having lifting devices for lowering and raising storing containers, and where the container handling vehicles are operating on the storage grid and within a working space arranged above the storage grid, for retrieving storage containers from and storing storage containers in the storage columns, and for transporting the storage containers horizontally across the storage grid.

The system comprises at least two different temperature zones arranged horizontally relative to the storage grid, and where the storage grid is arranged in at least one of the temperature zones; a thermal barrier dividing the at least two temperature zones, and an elevator for lowering and raising a storage container between an access point accessible from one temperature zone on one side of the thermal barrier and a transfer zone in the storage grid for conveying storage containers between the elevator and a port column of the storage grid accessible to the one or more container handling vehicles within another temperature zone on the other side of the thermal barrier.

The invention further comprises a method for moving a container between different temperature zones in an automated storage and retrieval system comprising a three-dimensional storage grid with a plurality of storage columns for storing containers, one or more container handling vehicles having lifting devices for lowering and raising storing containers, and where the container handling vehicles are operating on the storage grid, within a working space arranged above the grid, for retrieving storage containers from and storing storage containers in the storage columns, and for transporting storage containers horizontally across the storage grid.

The method comprises the steps of:
- arranging the different temperature zones horizontally relative to the storage grid, and arranging the storage grid in at least one of the temperature zones;
- arranging a thermal barrier dividing the at least two temperature zones;
- loading, by mean of transfer zones, the storage container into an elevator running from an upper location to a lower location relative to said storage grid;
- lowering or raising, by means of an elevator, a storage container between an access point accessible from one temperature zone on one side of the thermal barrier and the transfer zone in the storage grid for conveying storage containers between the elevator and a port column of the storage grid accessible to the one or more container handling vehicles within another temperature zone on the other side of the thermal barrier.

According to one aspect of the invention the automated storage and retrieval system according comprises one temperature zone which is an ambient temperature zone in a region above the storage grid and another temperature zone which is a cooler temperature zone enclosing the storage grid and the one or more container handling vehicles operating on the storage grid within a working space arranged above the storage grid.

In one embodiment, the storage grid is arranged to provide multiple cooler temperature zones at different temperatures.

According to one embodiment of the invention the thermal barrier further provides a floor which divides a working space of the one or more container handling vehicles from a second working space having access to containers from the elevator.

In one embodiment, the elevator is a rotating elevator comprising a plurality of shelves for conveying the storage containers between the different temperature zones.

According to one embodiment of the invention an upper part of the elevator protrudes above a normal level of the thermal barrier.

In one embodiment, the elevator is arranged in a space between regions of storage columns of the storage grid. In another embodiment, the storage grid encircles the elevator.

According to one embodiment of the invention, the elevator has a first transfer zone on one side of the elevator for transferring a storage container from a storage column of the storage grid to the elevator and a second transfer zone on the other side of the elevator for transferring a storage container from the elevator to a port column of the storage grid. The transfer zones may comprise conveyors which are arranged to convey storage containers between the elevator a port of the storage grid, each transfer zone being arranged below the working space of the one or more container handling vehicles.

In the following description, numerous specific details are introduced by way of example only to provide a thorough understanding of embodiments of the claimed system and method. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

### Brief description of the drawings

Following drawings are appended to facilitate the understanding of the invention.
Fig. 1 is a perspective view of a storage grid of a prior art automated storage and retrieval system.
Fig. 2 is a side view of the automated storage and retrieval system having different temperature zones according to one embodiment of the invention.
Fig. 3 is a side view of the automated storage and retrieval system having different temperature zones according to another embodiment of the invention.
Fig. 4 is a side view of the automated storage and retrieval system having different temperature zones and where storage grids are separated.

In the drawings, like reference numerals have been used to indicate like parts, elements or features unless otherwise explicitly stated or implicitly understood from the context.

### Detailed description of the invention

In the following, embodiments of the invention will be discussed in more detail by way of example only and with reference to the appended drawings. It should be understood that the drawings are not intended to limit the invention to the subject-matter depicted in the drawings.

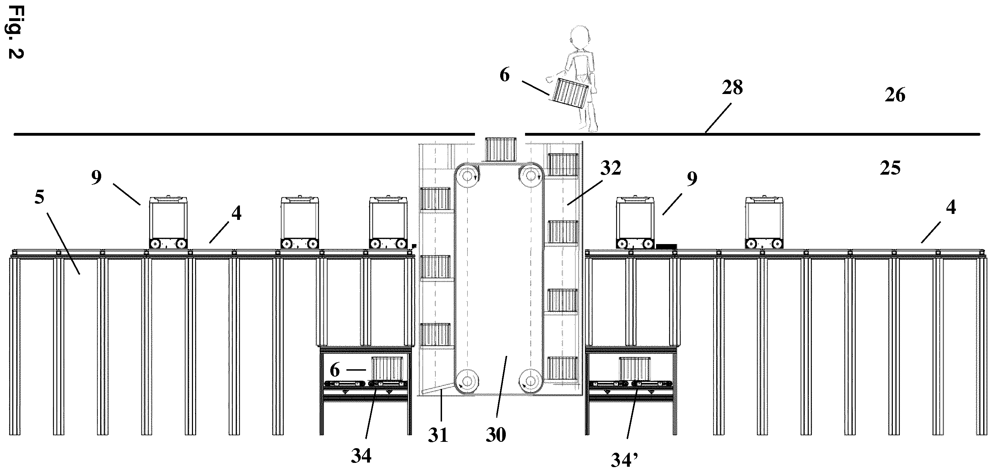

An embodiment of an automated storage and retrieval system according to the invention will now be discussed in more detail with reference to Fig. 2 to 4.

The invention concerns an automated storage and retrieval system comprising a three-dimensional storage grid 4 with a plurality of storage columns 5 for storing containers 6, one or more container handling vehicles 9 operating on the storage grid 4 and within a working space arranged above the storage grid 4, for retrieving storage containers 6 from and storing storage containers 6 in the storage columns 5, and for transporting the storage containers 6 horizontally across the storage grid 4. This construction is known from applicants own AutoStore ^{©} system.

The automated storage and retrieval system is adapted for handling containers between different temperature zones comprised in the system.

Figure 2 is a side view of the automated storage and retrieval system, according to one embodiment of the invention, having different temperature zones. In this embodiment, a lower location and an upper location of the automated storage and retrieval system is each provided with different temperature zones.

According to the present invention, the storage system comprises at least two different temperature zones 25, 26 arranged horizontally relative to the storage grid 4, and where the storage grid 4 is arranged in at least one of the temperature zones 25, 26. A thermal barrier 28 dividing the at least two temperature zones 25, 26, and an elevator for lowering and raising a storage container 6 between an access point accessible from one temperature zone on one side of the thermal barrier 28 and a transfer zone 34 accessible to the one or more container handling vehicles 9 within another temperature zone on the other side of the thermal barrier 28.

According to one embodiment of the storage system, the elevator 30 is arranged in a space between regions of storage columns 5 of the storage grid 4. According to another embodiment, the storage grid 4 encircles the elevator. The elevator 30 can then be installed such that it occupies two or more columns of the storage grid 4.

In one embodiment, one temperature zone is an ambient temperature zone 26 in a region above the storage grid 4 and another temperature zone is a cooler temperature zone 25 enclosing the storage grid 4 and the one or more container handling vehicles 9 operating on the storage grid 4 within a working space arranged above the storage grid.

In another embodiment, the storage grid 4 is arranged to provide multiple cooler temperature zones at different temperatures.

The different temperature zones are preferably separated by a closed layer for ensuring physical separated temperature zones 25, 26. In one embodiment of the invention the closed layer is insulated. The insulation can be any type of known insulations material such as for instance expanded polyester, woven glass fiber or rock wool.

According to one embodiment of the invention, the thermal barrier 28 further provides a floor which divides a working space of the one or more container handling vehicles 9 from a second working space having access to containers from the elevator.

According to one aspect of the invention, the elevator is a rotating elevator 30 for transporting containers between the different temperature zones 25, 26. The rotating elevator 30 is installed such that it is running between an upper and a lower location relative to said storage grid 4.

The rotating elevator 30 may comprise a plurality of shelves 31 for conveying the storage containers 6 between the different temperature zones 25, 26. The shelves 31 are connected to a belt comprised in the rotating elevator. Each shelve 31 may accommodate at least one container 6.

Constructional details of the rotating elevator are regarded as known prior art. There are a lot of examples of rotating elevators 30 also known as paternoster comprising a chain of open compartments 32 moving continuously in a loop up and down. Normally these are designed for passengers stepping in and out of the compartments 32. There are however similar elevators for transporting different items.

The rotating elevator is installed such that the shelfs 31 are running between an upper and lower location of the storage system. In one embodiment of the invention, the upper location is arranged as a pick-up point for retrieving containers 6 transported by the rotating elevator 30, as well as an input point for storing containers 6 in the storage grid 4.

The upper location, arranged as a pick-up location, may be kept at ambient temperature while the lower location is kept at a low temperature for keeping different products stored in the containers 6 chilled or frozen. The rotating elevator 30 will provide an efficient way of transporting containers to and from the different temperature zones.

For efficiently moving containers 6 to and from the storage grid 4 and the shelfs 31 of the rotating elevator 30, the automated storage and retrieval system may further comprise transfer zones 34 and 34'. According to one embodiment, the elevator has a first transfer zone 34 on one side of the elevator for transferring a storage container 6 from a storage column of the storage grid to the elevator and a second transfer zone 34' on the other side of the elevator for transferring a storage container 6 from the elevator to a port column of the storage grid.

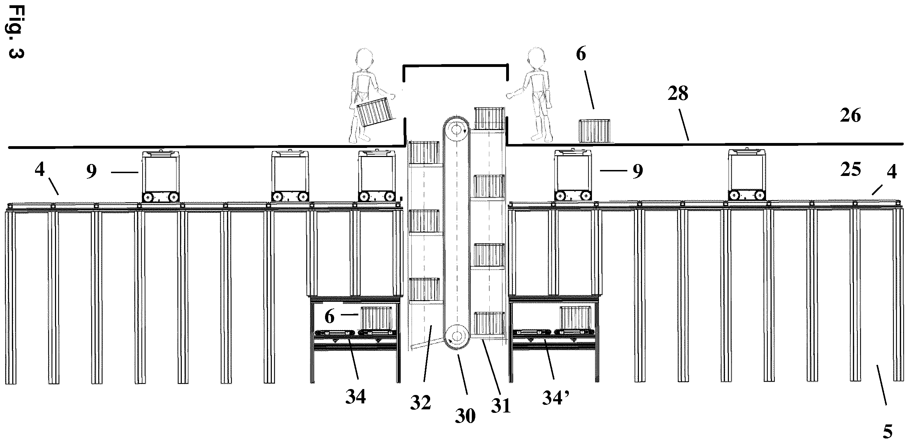

If the elevator 30 is installed such that it occupies two or more columns of the storage grid 4, each transfer zone 34 and 34' for transferring containers 6 to and from the rotating elevator 30 can be installed in at least two storage columns 5 of the storage grid 4, i.e. one column is used for a transfer zone 34 for transferring a container 6 to the rotating elevator 30, and one columns is used for another transfer zone 34' for transferring a container 6 from the rotating elevator 30. These embodiments where the transfer zones 34 and 34' are integrated as part of a storage grid 4 are shown in figures 2 and 3.

In one embodiment, the transfer zones 34, 34' comprises conveyors which are arranged to convey storage containers 6 between the elevator port of the storage grid 4, each transfer zone 34, 34' being arranged below the working space of the one or more container handling vehicles.

Figure 3 shows one embodiment of the invention, where an upper part of the elevator extends above the level of the closed layer at the upper location relative to the storage grid 4, meaning that the elevator protrudes above a normal level of the thermal barrier 28. This embodiment provides an alternative access to containers 6 transported by the rotating elevator 30 compared to the embodiment shown in figure 2. The embodiment enables access to containers 6 from both sides of the rotating elevator 30 instead of access only from the top as illustrated in figure 2.

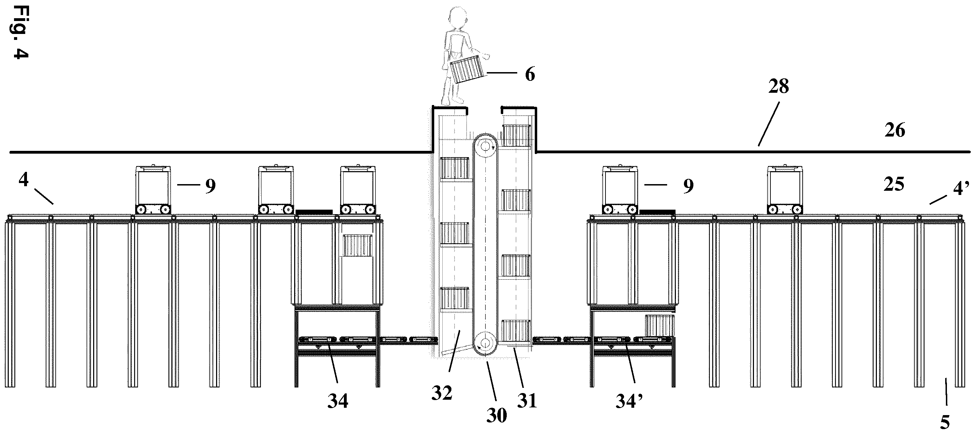

Figure 4 shows yet another embodiment of the automated storage and retrieval system having different temperature zones 25, 26. In this embodiment, two different storage grids 4, 4' are located at different locations and connected to the rotating elevator 30 by means of the transfer zones 34, 34', each having a length corresponding to the distance from the grids 4 and 4' to the rotating elevator 30, thus enabling transferring of containers 6 from the grids 4 and 4' and to and from the rotating elevator 30.

Containers 6 and different items contained in the containers 6 can be handled from the pick-up location by persons or robots. When a container 6 is raised to the pick-up point by means of the rotating elevator 30 it can be replaced with an empty container 6 or one or more items stored in the container can be picked-up.

The present invention further comprises a method for moving a container 6 between different temperature zones arranged in an automated storage and retrieval system comprising a three-dimensional storage grid 4 with a plurality of storage columns 5 for storing containers 6, one or more container handling vehicles 9 operating on the storage grid 4, within a working space arranged above the grid 4, for retrieving storage containers 6 from and storing storage containers 6 in the storage columns 5, and for transporting storage containers 6 horizontally across the storage grid 4.

The method comprises a step of loading the storage container 6 into an elevator running from an upper location to a lower location relative to said storage grid 4.

The next step is moving the storage container 6 through a thermal barrier 28, dividing the different temperature zones, by means of the elevator running from an upper location to a lower location relative to said storage grid 4.

The number of different temperature zones and their location in the storage grid 4 will depend on type of products to be stored in the containers 6.

When storing products such as food to be chilled or frozen the storing temperature is critical. For keeping food cold at fridge temperature, a temperature between 1°C to 4°C is desirable. For food to be frozen a temperature below - 18°C is desirable.

As an example of one embodiment of the invention, a lower part of the three-dimensional storage grid 4 is arranged to have a temperature for keeping food frozen. Another part of the storage grid 4, situated above said lower part is arranged to have a temperature for keeping food cold. The pick-up point, where products are picked from containers or placed in containers, may be held at ambient temperature, e.g. 20°C.

Transportation of containers between the different temperature zones is provided by arranging an elevator for operation between the different temperature zones 25, 26. This is preferably a rotating elevator 30 installed such that it is running from an upper location, which in this case is the pick-up point, to a lower location relative to said storage grid 4, i.e. the chilled and/or frozen zones of the storage grid 4. The elevator is fitted with sections or compartments 32 for accommodating the containers 6 such that containers 6 are moved from one temperature zone to another when the rotating elevator 30 is running.

To enable transfer of containers 6 to and from the storage grids 4, 4' and the rotating elevator 30, the automated storage and retrieval system is arranged with transfer zones 34, 34'. Containers 6 can then be delivered to or picked up from the transfer zones 34, 34' by means of container handling vehicles operating on the storage grid 4. The transfer zones 34, 34' ensures that containers 6 are placed in or out of the compartments 32 of the rotating elevator 30.

Each compartment 32 of the rotating elevator 30 will typically accommodate one container 6. It is however possible to load and handle two or more containers 6 in each compartment 32 by making the sections bigger, in width and/or heights.

If a compartment 32 of the rotating elevator 30 is made bigger by increasing the height, the rotating elevator 30 will first receive one container 6, it will then rotate in a direction allowing another container 6 to be placed on top of the first container 6. This action normally means that the rotation direction of the elevator 30 is reversed in a period, thus enabling the second container to be placed on top of the first container 6 already placed in the compartment 32 of the rotating lift 30. When loading of the second container 6 is completed, the rotation direction of the elevator 30 will again return to the main rotation direction, e.g. in a clock-wise direction as illustrated in the figures.

The automated storage and retrieval system according to the invention can be customised to the layout of an existing building, where for instance one temperature zone is located at one floor of a building while another temperature zone is located at another floor. A rotating elevator 30 will provide an efficient way of transporting containers between the floors. A skilled person will understand that there are several possible configurations within the scope of the invention.

The present invention introduces an efficient and compact storage system for storing and accessing items in containers, and where these items are to be stored at a different temperature than the temperature at a pick-up location.
1. An automated storage and retrieval system comprising a three-dimensional storage grid (4) with a plurality of storage columns (5) for storing containers (6), one or more container handling vehicles (9) having lifting devices for lowering and raising storing containers (6), and where the container handling vehicles (9) are operating on the storage grid (4) and within a working space arranged above the storage grid (4), for retrieving storage containers (6) from, and storing storage containers (6) in the storage columns (5), and for transporting the storage containers (6) horizontally across the storage grid (4), **characterised in** that the system comprises:
   - at least two different temperature zones (25, 26) arranged horizontally relative to the storage grid (4), and where the storage grid (4) is arranged in at least one of the temperature zones (25, 26);
   - a thermal barrier (28) dividing the at least two temperature zones (25, 26), and
   - an elevator (30) for lowering and raising a storage container (6) between an access point accessible from one temperature zone on one side of the thermal barrier (28) and a transfer zone (34) in the storage grid (4) for conveying storage containers between the elevator and a port column of the storage grid accessible to the one or more container handling vehicles (9) within another temperature zone on the other side of the thermal barrier (28).
2. The automated storage and retrieval system according to item 1, where one temperature zone is an ambient temperature zone (26) in a region above the storage grid (4) and another temperature zone is a cooler temperature zone (25) enclosing the storage grid (4) and the one or more container handling vehicles (9) operating on the storage grid (4) within a working space arranged above the storage grid.
3. The automated storage and retrieval system according to item 2, where the storage grid (4) is arranged to provide multiple cooler temperature zones at different temperatures.
4. The automated storage and retrieval system according to any of the previous claims, where the thermal barrier (28) further provides a floor which divides a working space of the one or more container handling vehicles (9) from a second working space having access to containers from the elevator.
5. The automated storage and retrieval system according to any of the previous items, where the elevator is a rotating elevator (30).
6. The automated storage and retrieval system according to item 5, where the rotating elevator (30) comprises a plurality of shelves (31) for conveying the storage containers (6) between the different temperature zones (25, 26).
7. The automated storage and retrieval system according to any of the previous items, where an upper part of the elevator (30) protrudes above a normal level of the thermal barrier (28).
8. The automated storage and retrieval system according to any of the preceding items, where the elevator (30) is arranged in a space between regions of storage columns (5) of the storage grid (4).
9. The automated storage and retrieval system according to any of the previous items, wherein the storage grid (4) encircles the elevator.
10. The automated storage and retrieval system according to any of the previous items, wherein the elevator has a first transfer zone (34) on one side of the elevator for transferring a storage container (6) from a storage column of the storage grid to the elevator and a second transfer zone (34') on the other side of the elevator for transferring a storage container (6) from the elevator to a port column of the storage grid.
11. The automated storage and retrieval system according to item 10, where the transfer zones (34, 34') comprises conveyors which are arranged to convey storage containers (6) between the elevator port of the storage grid (4), each transfer zone (34, 34') being arranged below the working space of the one or more container handling vehicles.
12. A method for moving a container (6) between different temperature zones (25, 26) in an automated storage and retrieval system comprising a three-dimensional storage grid (4) with a plurality of storage columns (5) for storing containers (6), one or more container handling vehicles (9) having lifting devices for lowering and raising storing containers (6), and where the container handling vehicles (9) are operating on the storage grid (4), within a working space arranged above the grid (4), for retrieving storage containers (6) from and storing storage containers (6) in the storage columns (5), and for transporting storage containers (6) horizontally across the storage grid (4), **characterised in** that the method comprises the steps of:
   - arranging the different temperature zones (25, 26) horizontally relative to the storage grid (4), and arranging the storage grid (4) in at least one of the temperature zones (25, 26);
   - arranging a thermal barrier (28) dividing the at least two temperature zones (25, 26);
   - loading, by mean of transfer zones (34), the storage container (6) into an elevator running from an upper location to a lower location relative to said storage grid (4);
   - lowering or raising, by means of an elevator (30), a storage container (6) between an access point accessible from one temperature zone on one side of the thermal barrier (28) and the transfer zone (34) in the storage grid (4) for conveying storage containers between the elevator and a port column of the storage grid accessible to the one or more container handling vehicles (9) within another temperature zone on the other side of the thermal barrier (28).

## Claims

1. An automated storage and retrieval system comprising: a three-dimensional storage grid (4) with a plurality of storage columns (5) for storing storage containers (6); and a working space, for one or more container handling vehicles (9), arranged above the storage grid (4), the one or more container handling vehicles (9) having lifting devices for lowering and raising storage containers (6), being operable on the storage grid (4), and being for retrieving storage containers (6) from, and storing storage containers (6) in, the storage columns (5), and for transporting the storage containers (6) horizontally across the storage grid (4), wherein the system comprises:
- at least two different temperature zones (25, 26) arranged horizontally relative to the storage grid (4), and where the storage grid (4) is arranged in at least one of the temperature zones (25, 26);
- a thermal barrier (28) dividing the at least two temperature zones (25, 26), and
- an elevator (30) for lowering and raising a storage container (6) between an access point accessible from one temperature zone on one side of the thermal barrier (28) and a transfer zone (34) accessible to the one or more container handling vehicles (9) within another temperature zone on the other side of the thermal barrier (28).

2. The automated storage and retrieval system according to claim 1, wherein the transfer zone (34) is in the storage grid (4) and is for conveying the storage containers (6) between the elevator (30) and a port column of the storage grid (4).

3. The automated storage and retrieval system according to claim 1 or claim 2, where one of the temperature zones is an ambient temperature zone (26) in a region above the storage grid (4) and another of the temperature zones is a cooler temperature zone (25) enclosing the storage grid (4) and the one or more container handling vehicles (9) operable on the storage grid (4) within the working space arranged above the storage grid.

4. The automated storage and retrieval system according to claim 3, where the storage grid (4) is arranged to provide multiple cooler temperature zones at different temperatures.

5. The automated storage and retrieval system according to any of the previous claims, where the thermal barrier (28) further provides a floor which divides the working space of the one or more container handling vehicles (9) from a second working space having access to containers from the elevator.

6. The automated storage and retrieval system according to any of the previous claims, where the elevator is a rotating elevator (30).

7. The automated storage and retrieval system according to claim 6, where the rotating elevator (30) comprises a plurality of shelves (31) for conveying the storage containers (6) between the different temperature zones (25, 26).

8. The automated storage and retrieval system according to any of the previous claims, where an upper part of the elevator (30) protrudes above a normal level of the thermal barrier (28).

9. The automated storage and retrieval system according to any of the preceding claims, where the elevator (30) is arranged in a space between regions of storage columns (5) of the storage grid (4).

10. The automated storage and retrieval system according to any of the previous claims, wherein the storage grid (4) encircles the elevator.

11. The automated storage and retrieval system according to any of the previous claims, wherein the elevator has a first transfer zone (34) on one side of the elevator for transferring a storage container (6) from a storage column of the storage grid to the elevator and a second transfer zone (34') on the other side of the elevator for transferring a storage container (6) from the elevator to a port column of the storage grid.

12. The automated storage and retrieval system according to claim 11, where the transfer zones (34, 34') comprise conveyors which are arranged to convey storage containers (6) between the elevator and the port column of the storage grid (4), each transfer zone (34, 34') being arranged below the working space of the one or more container handling vehicles.

13. A method for moving a container (6) between different temperature zones (25, 26) in an automated storage and retrieval system comprising: a three-dimensional storage grid (4) with a plurality of storage columns (5) for storing storage containers (6); and a working space, for one or more container handling vehicles (9), arranged above the storage grid (4), the one or more container handling vehicles (9) having lifting devices for lowering and raising storage containers (6), being operable on the storage grid (4), and being for retrieving storage containers (6) from, and storing storage containers (6) in, the storage columns (5), and for transporting storage containers (6) horizontally across the storage grid (4), wherein the method comprises the steps of:
- arranging the different temperature zones (25, 26) horizontally relative to the storage grid (4), and arranging the storage grid (4) in at least one of the temperature zones (25, 26);
- arranging a thermal barrier (28) dividing the at least two temperature zones (25, 26);
- loading, by mean of a transfer zone (34), a storage container (6) into an elevator running from an upper location to a lower location relative to said storage grid (4);
- lowering or raising, by means of the elevator (30), the storage container (6) between an access point accessible from one temperature zone on one side of the thermal barrier (28) and the transfer zone (34) accessible to the one or more container handling vehicles (9) within another temperature zone on the other side of the thermal barrier (28).
